**Europäisches Patentamt**

**European Patent Office**

**Office européen des brevets**

(19)

(11) Veröffentlichungsnummer: **0 279 145**
**B1**

## (12) EUROPÄISCHE PATENTSCHRIFT

(45) Veröffentlichungstag der Patentschrift:
22.08.90

(51) Int. Cl.⁵: **B26B 13/22, B25B 7/22**

(21) Anmeldenummer: **87810781.2**

(22) Anmeldetag: **24.12.87**

(54) Schere zum Schneiden von Strangmaterial.

(30) Priorität: **11.02.87 CH 503/87**

(43) Veröffentlichungstag der Anmeldung:
**24.08.88 Patentblatt 88/34**

(45) Bekanntmachung des Hinweises auf die Patenterteilung:
**22.08.90 Patentblatt 90/34**

(84) Benannte Vertragsstaaten:
**AT CH DE FR GB IT LI NL SE**

(56) Entgegenhaltungen:
**GB-A- 2 144 070**
**US-A- 2 070 217**
**US-A- 2 722 695**

(73) Patentinhaber: **HILTI Aktiengesellschaft,
FL-9494 Schaan(LI)**

(72) Erfinder: **Leibhard, Erich, Bauweberstrasse 2,
D-8000 München 71(DE)**

(74) Vertreter: **Wildi, Roland, Hilti Aktiengesellschaft
Patentabteilung, FL-9494 Schaan(LI)**

## Beschreibung

Die Erfindung betrifft eine Schere mit über ein Gelenk miteinander verbundenen Scherklingen, insbesondere zum Schneiden von flexiblem, hohlzylindrischem Strangmaterial dünner Wandstärke.

Zur Verankerung im Mauerwerk oder undefinierbaren Untergründen werden sogenannte Siebhülsen verwendet, in welche nach dem Einbringen einer aushärtbaren Masse das zu setzende Befestigungselement unter Verdrängen der Masse in die Hohlräume des Untergrundes eingeführt wird.

Bisher wurden für diese Anwendungen konfektionierte Siebhülsen von bestimmtem Durchmesser und bestimmter Länge verwendet. In der Praxis hat es sich als notwendig erwiesen, die Setztiefe dem Untergrund anzupassen. So ist gelegentlich ein Mehrfaches der normalerweise vorgesehenen Setztiefe erforderlich. Um das System auch für diese Anwendungen verwenden zu können, muss die Länge der Siebhülse der Bohrlochtiefe angepasst werden. Dies kann meist nur direkt auf der Baustelle erfolgen. Die Siebhülsen können somit vom Anwender selbst von als Meterware geliefertem Strangmaterial auf die erforderliche Länge abgeschnitten werden. Beim Abschneiden des Strangmaterials mittels einer Schere wird jedoch das Strangmaterial flachgequetscht. Für die Anwendung der Siebhülse muss diese wieder auf den ursprünglichen Durchmesser zurückverformt und kalibriert werden. Mit den bisher üblichen Mitteln ist dies jedoch sehr mühsam und zeitaufwendig.

Der Erfindung liegt die Aufgabe zugrunde, ein Werkzeug zu schaffen, mit dem flexibles, hohlzylindrisches Strangmaterial abgeschnitten und verarbeitet werden kann.

Gemäss der Erfindung wird dies durch einen der Aufweitung des Stranges dienenden, koaxial zum Gelenk der Scherklingen angeordneten Dorn erreicht, der wenigstens einen sich zum freien Ende hin konisch verjüngenden Bereich aufweist.

Ein solcher Dorn wird nach dem Abschneiden des Strangmaterials in das flachgequetschte Ende des abgeschnittenen Teils eingeschoben, wobei das Strangmaterial in einen kreisrunden Querschnitt zurückverformt wird. Diese Verformung erfolgt ohne grossen Kraft- und Zeitaufwand.

Die Anordnung des Dornes koaxial zum Gelenk der Scherklingen ermöglicht eine gute Handhabung der Schere. Eine solche Anordnung des Dornes wirkt beim Abschneiden des Strangmaterials nicht störend. Zum Aufweiten und Kalibrieren der abgeschnittenen Hülsen kann die Schere am Schneiden- und Griffteil mit einer Hand gut festgehalten und die in der anderen Hand gehaltene Hülse eingeführt werden. Da die mechanische Beanspruchung des Dornes gering ist, kann dieser beispielsweise aus Leichtmetall gefertigt werden. Der quer zur Schere wegragende Dorn ergibt somit kein grosses störendes Kippmoment auf die Schere.

Für die Zentrierung der vom Strangmaterial abgeschnittenen Hülse im Bohrloch, bzw. für die Zentrierung des Befestigungselementes in der Hülse, muss die Hülse im Mündungsbereich einen bestimmten Durchmesser aufweisen. Um die Aufweitung der Hülse beim Aufschieben auf den Dorn zu begrenzen, ist es zweckmässig, dass der Dorn wenigstens einen, sich vom freien Ende weg an den sich konisch verjüngenden Bereich anschliessenden, zylindrischen Bereich aufweist, dessen Durchmesser dem grössten Durchmesser des sich konisch verjüngenden Bereiches aufweist. Durch den zylindrischen Bereich bleibt der Druchmesser der kalibrierten Hülse beim Aufschieben auf den Dorn innerhalb eines grösseren Bereiches konstant. Das Einführen des Dornes in die Hülse kann jedoch durch eine Schulter begrenzt werden.

Bei der Dimensionierung von Befestigungen gelangen je nach Grösse der auftretenden Beanspruchungen und Art des Untergrundes Siebhülsen von unterschiedlichem Durchmesser zur Anwendung. Um denselben Dorn für verschiedene Hülsendurchmesser verwenden zu können, ist es vorteilhaft, dass der Dorn mehrere hintereinander angeordnete zylindrische und sich konisch verjüngende Bereiche aufweist. Somit können mit demselben Dorn beispielsweise zwei, drei oder vier verschiedene Hülsendurchmesser verarbeitet werden. Die sich konisch verjüngenden Bereiche dienen dabei der Aufweitung und die zylindrischen Bereiche der Kalibrierung der Hülsen.

Für eine einfache Herstellung der Schere ist es vorteilhaft, den Dorn mittels einer als Gelenkachse ausgebildeten Befestigungsschraube mit den Scherklingen zu verbinden. Der Dorn ist somit mit der Schere leicht lösbar verbunden. Es können daher handelsübliche Scheren verwendet werden, die nachträglich mit dem zusätzlichen Dorn versehen werden. Dadurch können die Kosten für das Spezialwerkzeug sehr gering gehalten werden.

Die Erfindung soll nachstehend anhand der sie beispielsweise wiedergebenden Zeichnungen näher erläutert werden. Es zeigen:

Fig. 1 eine erfindungsgemässe Schere, in perspektivischer Darstellung,

Fig. 2 einen Schnitt durch die in Fig. 1 dargestellte Schere entlang der Linie II–II, mit aufgeschobenem Strangmaterial.

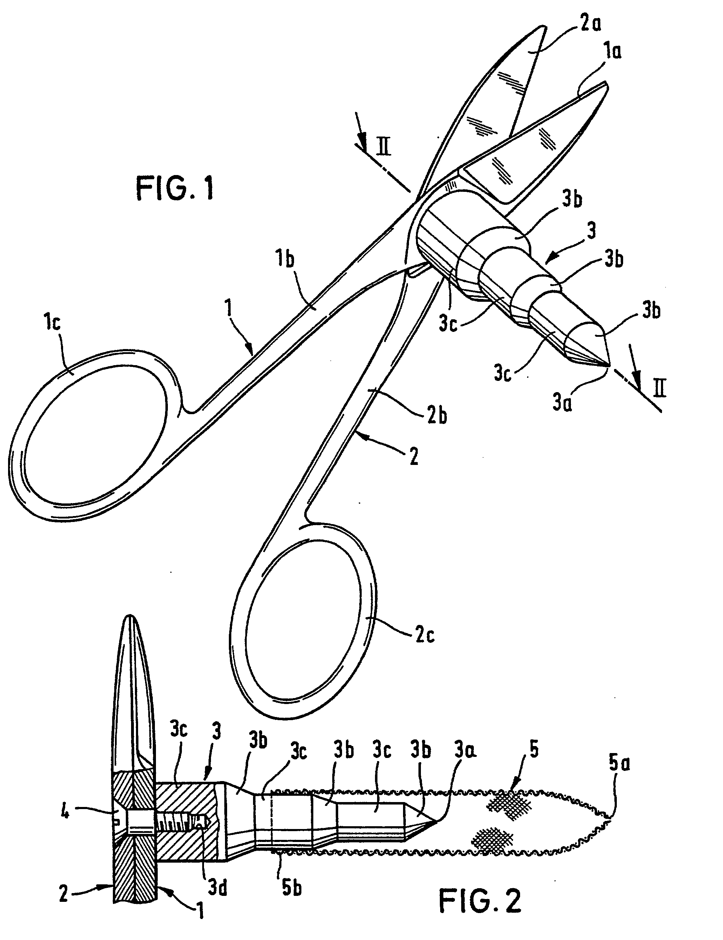

Die aus Fig. 1 und 2 ersichtliche, erfindungsgemässe Schere besteht im wesentlichen aus einer insgesamt mit 1 bezeichneten, als zweiarmiger Hebel ausgebildeten Scherklinge und einer insgesamt mit 2 bezeichneten, mit der Scherklinge 1 gelenkig verbundenen, ebenfalls als zweiarmiger Hebel ausgebildeten Scherklinge. Der eine Arm der Scherklingen 1, 2 ist als Schneide 1a, 2a ausgebildet. Der längere, der Betätigung der Schere dienende Hebelarm 1b, 2b ist an seinem freien Ende mit einer Oese 1c, 2c versehen. Ein insgesamt mit 3 bezeichneter Dorn ragt im Gelenk der beiden Scherklingen 1, 2 senkrecht von diesen weg. Der Dorn 3 weist ein freies Ende 3a sowie drei sich zum freien Ende 3a hin konisch verjüngende Bereiche 3b auf. Der Dorn 3 ist ausserdem mit drei sich vom freien Ende 3a weg an die sich konisch verjüngenden Bereiche 3b anschliessenden, zylindrischen Bereichen 3c versehen. Der Durchmesser der zylindrischen Bereiche 3c entspricht jeweils dem grössten Durchmesser des sich in Richtung des freien Endes 3a dran anschliessenden konischen Bereiches 3b.

Die Schneiden 1a, 2a dienen dem Abschneiden von flexiblem hohlzylindrischem Strangmaterial auf eine vorbestimmte Länge. Beim Abschneiden des als Meterware gelieferten Strangmaterials wird dieses flachgequetscht, so dass es für die weitere Verwendung wieder auf die zylindrische Form gebracht werden muss. Dies ist in Fig. 2 dargestellt. Die beiden Scherklingen 1, 2 werden im Gelenkpunkt durch eine Befestigungsschraube 4 miteinander verbunden. Die Befestigungsschraube 4 ist in ein Innengewinde 3d des Dornes 3 eingeschraubt und dient als Gelenkachse für die beiden Scherklingen 1, 2.

Ein insgesamt mit 5 bezeichneter Strang ist zum Kalibrieren auf den Dorn 3 aufgeschoben. Der Strang 5 weist ein vom Abschneiden her flachgequetschtes Ende 5a und ein durch den Dorn 3 bereits kalibriertes Ende 5b auf. Da der Dorn 3 drei zylindrische Bereiche 3c von unterschiedlichem Durchmesser aufweist, kann der Dorn 3 für das Kalibrieren vom Strangmaterial mit drei verschiedenen Nenndurchmessern verwendet werden. Da der Dorn 3 beim Kalibrieren des Stranges 5 mechanisch nicht stark beansprucht wird, kann der Dorn 3 beispielsweise aus Aluminium hergestellt werden. Dies ergibt ein geringes Gewicht und somit keine die Handhabung der Schere beim Abschneiden von Strangmaterial beeinträchtigende Kippwirkung. Erforderlichenfalls kann der Dorn 3 auch leicht gegen einen anderen Dorn von unterschiedlichem Durchmesser ausgetauscht werden.

## Patentansprüche

1. Schere mit über ein Gelenk miteinander verbundenen Scherklingen (1, 2), insbesondere zum Schneiden von flexiblem hohlzylindrischem Strangmaterial (5) dünner Wandstärke, gekennzeichnet durch einen der Aufweitung des Stranges (5) dienenden, koaxial zum Gelenk der Scherklingen (1, 2) angeordneten Dorn (3), der wenigstens einen sich zum freien Ende (3a) hin konisch verjüngenden Bereich (3b) aufweist.

2. Schere nach Anspruch 1, dadurch gekennzeichnet, dass der Dorn (3) wenigstens einen, sich vom freien Ende (3a) weg an den sich konisch verjüngenden Bereich (3b) anschliessenden zylindrischen Bereich (3c) aufweist, dessen Durchmesser dem grössten Durchmesser des sich konisch verjüngenden Bereiches (3b) entspricht.

. 3. Schere nach einem der Ansprüche 1 oder 2, dadurch gekennzeichnet, dass der Dorn (3) mehrere hintereinander angeordnete zylindrische und sich konisch verjüngende Bereiche (3c, 3b) aufweist.

4. Schere nach einem der Ansprüche 1 bis 3, dadurch gekennzeichnet, dass der Dorn (3) mittels einer als Gelenkachse ausgebildeten Befestigungsschraube (4) mit den Scherklingen (1, 2) verbunden ist.

## Claims

1. Scissors having shearing blades (1, 2) connected to one another by way of a hinge, more especially for cutting flexible hollow-cylindrical webbing material (5) of thin wall thickness, characterised by a mandrel (3) which serves for expanding the webbing (5) and is arranged coaxially with the hinge of the shearing blades (1, 2) and which has at least one region (3b) tapering conically towards its free end (3a).

2. Scissors according to claim 1, characterised in that the mandrel (3) has at least one cylindrical region (3c) which is contiguous, away from the free end (3a), to the conically tapering region (3b) and the diameter of which corresponds to the largest diameter of the conically tapering region (3b).

3. Scissors according to one of claims 1 or 2, characterised in that the mandrel (3) has several cylindrical and conically tapering regions (3c, 3b) arranged one behind the other.

4. Scissors according to one of claims 1 to 3, characterised in that the mandrel (3) is connected to the shearing blades (1, 2) by means of a fastening screw (4) which is designed as a hinge axis.

## Revendications

1. Ciseaux, comprenant des lames (1, 2) reliées entre elles par l'intermédiaire d'une articulation, en particulier pour la coupe de boyaux (5) flexibles en forme de cylindre creux de faible épaisseur de paroi, caractérisés en ce qu'ils comprennent un mandrin (3) destiné à l'élargissement du boyau (5) et disposé coaxialement à l'articulation des lames (1, 2), lequel mandrin présente au moins une section (3b) qui se rétrécit de manière conique en direction de l'extrémité libre (3a).

2. Ciseaux selon la revendication 1, caractérisés en ce que le mandrin (3) comprend au moins une section cylindrique (3c) qui se raccorde, à l'opposé de l'extrémité libre (3a), à la section (3b) se rétrécissant de manière conique, et dont le diamètre correspond au plus grand diamètre de la section (3b) qui se rétrécit de manière conique.

3. Ciseaux selon l'une des revendications 1 ou 2, caractérisés en ce que le mandrin (3) comprend une pluralité de sections (3c, 3b) cylindriques et se rétrécissant de manière conique disposées les unes derrière les autres.

4. Ciseaux selon l'une des revendications 1 à 3, caractérisés en ce que le mandrin (3) est rattaché aux lames (1, 2) au moyen d'une vis de fixation (4) conformée en axe d'articulation.

FIG. 1

FIG. 2